Europäisches Patentamt

European Patent Office

Office européen des brevets

(11) Publication number: **0 441 045 A2**

# EUROPEAN PATENT APPLICATION

(21) Application number: 90313727.1

(51) Int. Cl.5: **B01D 46/52**

(22) Date of filing: **17.12.90**

(30) Priority: **05.02.90 US 475695**

(43) Date of publication of application:
**14.08.91 Bulletin 91/33**

(84) Designated Contracting States:
**DE FR GB IT NL**

(71) Applicant: **GOBLIN LIMITED**
**Cross Green Approach**
**Leeds, Yorkshire LS9 0SX(GB)**

(72) Inventor: **Kuplas, Harbey**
**37 Westminster Crescent, Burnbridge**
**Harrogate, HG3 1LX Yorkshire(GB)**

(74) Representative: **Smith, Norman Ian et al**
**F.J. CLEVELAND & COMPANY 40-43**
**Chancery Lane**
**London WC2A 1JQ(GB)**

(54) **Cartridge-type filter.**

(57) A cartridge-type filter having a filter element (12) and first and second endpieces (14, 16) between which the filter element is sandwiched. The filter element (12) is formed as a strip of filter material having a plurality of folds (204) and its ends may be connected together to form a loop. The filter can be economically assembled by using hot-melt-adhesive films (18, 20) for bonding the first and second endpieces to the filter element. The endpieces are preferably formed of material sufficiently flexible in their main dimension that the filter shape as projected onto either endpiece can conform to differently-sized receptacles.

FIG. 1

## CARTRIDGE-TYPE FILTER

The present invention relates to a cartridge-type filter, and more particularly to such a filter employing a filter element formed as a strip of filter material.

Filters are employed in wet/dry vacuum cleaners for example, and may be in the form of a cloth bag. Typical cloth bag filters are relatively expensive to produce.

It would be desirable to produce a filter for use in a vacuum cleaner, for example, that is inexpensive to produce.

It would be further desirable to provide a filter having an increased size for filtering so that higher-efficiency filter material can be used.

A further, desirable trait of a filter would be the ability to conform in size to receptacles of different shapes.

The foregoing traits and advantages are realised, in preferred form, in a cartridge-type filter that comprises a filter element and first and second endpieces between which the filter element is sandwiched. The filter element, in an exemplary form, is shaped as a loop with first and second inlet/exit surfaces respectively facing a filter interior and a filter exterior. The loop-shaped filter comprises a strip of filter material shaped to have a plurality of folds. The fold creases are transverse to the first and second filter-inlet/exit surfaces.

An increased surface area of the filter is realised by employing the filter element with the mentioned plurality of folds. The filter is economical to make, and can conveniently employ hot-melt-adhesive films for bonding the first and second endpieces to the filter element. The filter shape as projected onto either endpiece is made conformable by fashioning the first and second endpieces with respective sheets of material that are suitably flexible across their main dimension.

The invention will be described now by way of example only with particular reference to the accompanying drawings. In the drawings:

Figure 1 is an exploded view in perspective of a cartridge-type filter in accordance with an exemplary embodiment of the invention.

Figure 1A is a simplifed perspective view of the filter of Figure 1 in assembled form.

Figure 2 is a fragmentary view of a portion of the filter element of the filter of Figure 1 taken from above in Figure 1.

Figure 3 is a simplified upper plan view of the filter of Figure 1 showing an annular and conformed shape of such filter.

Figure 4 is an upper plan view of a filter element having an approximately rectangular configuration.

Figure 5 is a block diagram illustrating use of the filter of the invention in a vacuum cleaner arrangement, and

Figure 6 is a flowchart illustrating a preferred process for assembling a cartridge-type filter of the invention.

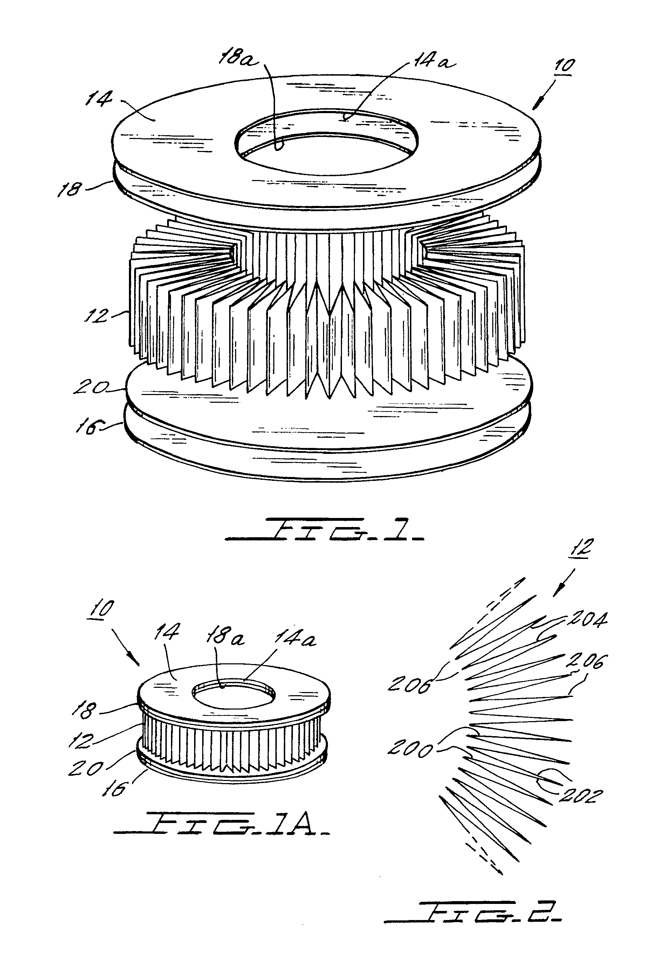

Figure 1 is an exploded view of a cartridge-type filter in accordance with an exemplary embodiment of the invention. The filter 10 comprises a filter element 12 and endpieces 14 and 16. Between such endpieces 14 and 16 the filter element 12 becomes sandwiched upon assembly of the filter. Endpieces 14 and 16 are preferably fixed to adjacent portions of the filter element 12 by a respective one of adhesive films 18 and 20, preferably of the hot-melt type.

Figure 1A shows a simplified perspective view of cartridge-type filter 10 in assembled form, with the thicknesses of the endpieces and adhesive films exaggerated for clarity. Openings 14a and 18a in endpiece 14 and adhesive film 18, respectively, provide access to the interior of the filter, and may face downwardly when the filter is in use.

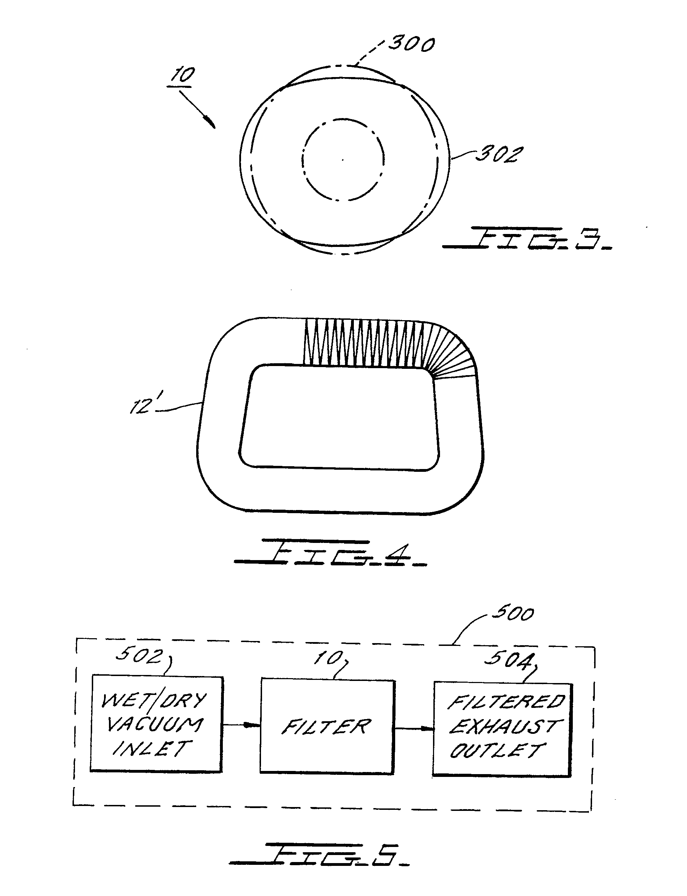

Figure 2 illustrates a segment of filter element 12 looking downwardly in the view of Figure 1. Filter element 12 has an interior inlet/outlet surface 200 that faces an interior of filter 10, and an inlet/outlet surface 202 that faces an exterior of the filter.

The filter element 12 comprises a plurality of folds 204 with fold creases 206 transverse, and preferably approximately orthogonal, to the inlet/outlet surfaces 200 and 202 of the filter element.

By shaping the filter element 12 as a strip with a plurality of folds 204, as illustrated, a large effective surface area for filtering is provided. This permits the use of a high-efficiency filter material so that the filter would have a comparable life to a filter formed as a bag, for example, but using a low-efficiency filter material. Filter element 12, in particular, may be formed of an elongated sheet of 20-25 micron filter material of 0.5 mm thickness, for instance, whose ends are adhered together if a loop-shaped filter is desired.

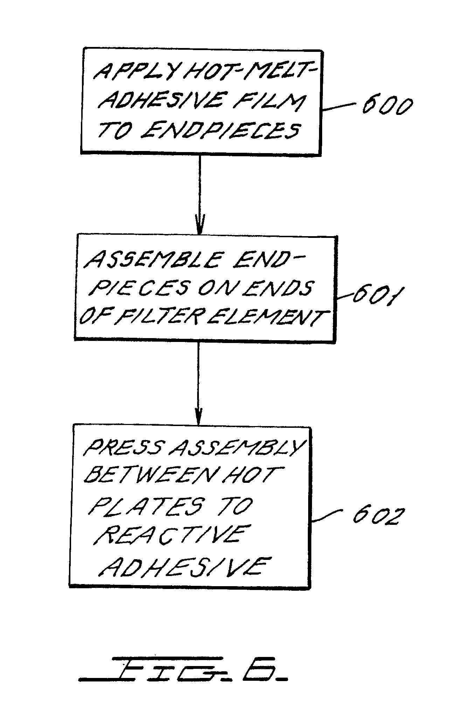

Referring back to Figure 1, the endpieces 14 and 16 are preferably formed of respective sheets of material that are sufficiently flexible in their respective main dimension as to make conformable the filter shape as projected onto either endpiece. Such a quality is typically found in cloth or other woven or non-woven textile material of a flexible nature, and may also be found in suitable flexible paper. With endpieces 14 and 16 having such flexibility, the filter 10, as shown in simplified form in Figure 3, has the property of being conformable in shape for instance from an annular circular form 300 to a distorted form 302. This is of considerable benefit for enabling filters to fit receptacles (not shown) that are not precisely matched to the filter.

Filter element 12 can be formed, for example, as a non-annular loop, with Figure 4 illustrating for instance a filter element 12' which is approximately rectangular in form.

The cartridge-type filter 10 of the invention may be suitably incorporated into a wet/dry vacuum cleaner 500 shown in block form in Figure 5. The filter 10 would be disposed between a wet/dry vacuum inlet 502 and a filtered exhaust outlet 504.

The present cartridge-type filter is easy to assemble. Figure 6 shows three basic steps 600-602 for assembling the filter. With reference to Figures 1 and 6, the hot-melt-adhesive films 18 and 20 are respectively applied to endpieces 14 and 16, as indicated in step 600. The penetration of the adhesive into the endpieces is controlled during this step so as to be at a minimum. This results in a maximum amount of adhesive remaining available to bond to endpieces to the filter element.

In step 601, the endpieces are assembled onto adjacent ends of the filter element. In step 602 the resulting assembly is pressed between hot plates (not shown) to reactivate the adhesive, which step would typically have a 3-second duration for an available hot-melt adhesive. The hot plates in the assembly are then separated, as by withdrawing the hot plates, and the assembly is allowed to cool for a duration of typically 6 seconds for an available hot-melt adhesive. The assembly is then complete.

The foregoing assembly procedure for a cartridge-type filter results in a filter whose cost is so low that in some applications it may be considered disposable.

The foregoing describes a cartridge-type filter than can utilise a high efficiency filter material and yet realise prolonged durability owing to a greater surface area for filtering. In preferred form, the filter is conformable in shape, and may be assembled economically.

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

**Claims**

1. A cartridge-type filter, comprising.
   a filter element (12);
   first and second endpieces (14, 16) between which the filter element is sandwiched;
   the filter element (12) having first and second inlet/exit surfaces (200, 202); and
   the filter element comprising a plurality of folds (204) with fold creases (206) which extend generally transverse to the first and second filter inlet/exit surfaces (200, 202).

2. A cartridge-type filter according to claim 1, wherein the first and second endpieces (14, 16) comprise respective sheets of material that are sufficiently flexible across their main dimension as to make conformable the shape of the filter element as projected onto either endpiece.

3. A cartridge-type filter according to claim 2, wherein the sheets comprise a textile material.

4. A cartridge-type filter according to claim 2 or claim 3, further comprising a respective adhesive film (18, 20) between each endpiece (14, 16) and the adjacent portion of the filter element (12).

5. A cartridge-type filter according to claim 4, wherein each adhesive film (18, 20) is of the hot-melt type.

6. A cartridge-type filter according to any preceding claim, wherein the filter element (12) comprises an elongated sheet of filter material.

7. A cartridge-type filter according to any preceding claim, wherein the filter element (12) is shaped as a loop.

_FIG. 1._

_FIG. 1A._

_FIG. 2_

_300_

_10_

_302_

_FIG. 3_

_12'_

_FIG. 4_

_500_

| _502_ | _10_ | _504_ |
| WET/DRY VACUUM INLET | FILTER | FILTERED EXHAUST OUTLET |

_FIG. 5_

APPLY HOT-MELT-ADHESIVE FILM TO ENDPIECES — 600

ASSEMBLE END-PIECES ON ENDS OF FILTER ELEMENT — 601

PRESS ASSEMBLY BETWEEN HOT PLATES TO REACTIVE ADHESIVE — 602

_FIG. 6_